# EUROPEAN PATENT APPLICATION

(11) **EP 4 748 804 A1**
(43) Date of publication of application: **27.05.2026**
(21) Application number: 25217736.5
(22) Date of filing: 21.11.2025
(51) Int. Cl.: C03B 7/00, C03B 7/088, C03B 7/09

(54) **CONFIGURABLE FEEDER ASSEMBLY FOR FORMING AND FEEDING MOLTEN GLASS GOBS IN AN INDIVIDUAL SECTION MACHINE FOR FORMING HOLLOW GLASSWARE**

(30) Priority: 26.11.2024 IT 202400026622
(71) Applicant: Bottero S.p.A., 12100 Cuneo (IT)
(72) Inventor: NEBBIAI, Manuel, 12100 CUNEO (IT); OSTORERO, Marcello, 12100 CUNEO (IT)
(74) Representative: Studio Torta S.p.A.

(57) **Abstract**

A feeding assembly (1), for forming and feeding glass gobs (2), has a bowl (11), for containing a mass of molten glass (13), and a plurality of outlet bodies (24, 24a, 24b, 24c, 24d, 24e), which can be mounted in a fixed position and interchangeably below the bowl (11) and have orifices (22, 22a) with different diameters; the orifices (22) of the outlet body (24) that has been mounted are aligned with corresponding plungers (16), axially movable along vertical axes (19) to form glass beads (6) from the mass of molten glass (13); the glass beads (6) are cut by a cutting device (9) arranged below the orifices (22) to form the glass gobs (2); the feeding assembly (1) is configured during a production change, by selecting one of the available diameters so as to meet a weight and/or shape factor for the glass gobs (2) that will need to be fed, by determining a target glass flow rate, by checking whether the selected diameter meets the target glass flow rate and, in the negative, by adjusting the height position of the orifices (22, 22a) with respect to the bowl (11).

## Description

### CROSS-REFERENCE TO RELATED APPLICATIONS

This patent application claims priority from Italian patent application no. 102024000026622 filed on 26 November 2024, the entire disclosure of which is incorporated herein by reference.

### Technical field

This invention relates to the configuration of a feeding assembly for forming and feeding glass gobs in an individual section machine, usually referred to as an I.S. machine, for forming hollow glassware in the event of a production change.

In particular, this invention relates to a configurable feeding assembly for forming and feeding glass gobs in an I.S. machine.

### Background

As is known, machines for forming hollow glassware, commonly known as I.S. machines, comprise a plurality of forming sections, each of which operates independently of the other sections to form a respective set of glassware from glass gobs from a distributor, arranged above the forming sections.

In turn, the glass gobs are obtained by cutting at least one glass bead, formed by means of a plunger extruder device acting in a crucible or bowl, usually called as "cuvette" in French, containing a mass of molten glass from a glass furnace. Towards the bottom, this bowl has an end wall bearing a plate with one or more orifices, each vertically aligned with a respective plunger of the extruder device. In practice, the plungers are driven with reciprocating motion along their vertical axes to push and extrude molten glass through these orifices and thus form respective glass beads. The latter are cut by a cutting device, for example scissors, placed immediately below the orifices to form the glass gobs that will then be sorted by the distributor to the various forming sections.

The plate at the bottom of the bowl is commonly referred to as the "orifice ring" and is normally interchangeable with other plates that have orifices of different diameters, in order to adapt the glass feeding to the different types of articles to be produced and/or the glass flow rate required by the set of forming sections that are arranged downstream.

In this regard, the total flow rate of molten glass fed must be equal to the product of the number of operating forming sections and the flow rate required by each section. The latter flow rate, in turn, depends on the weight of each glass article to be produced and the production rate (number of articles produced per unit of time). The weight of the glass article corresponds to the weight of each gob, which in turn depends on its diameter and length. For each gob weight to be produced, glassmaking experience suggests an optimal diameter for the orifice ring, chosen so as to also achieve a length-to-diameter ratio that enables good loading into the parison mould of the forming sections. In fact, the glass gobs fed to the various forming sections should have dimensions as close as possible to those of the articles to be produced. In other words, the ratio of the diameter and length of the glass gobs should be set so that it is as close as possible to the ratio of the base to the height of the glass article.

At the same time, the cutting device intervention times are determined by the production speed in the forming sections and the number of moulds.

After fitting the orifice ring having the chosen diameter, from among the ones available in the machine equipment, the weight of the gob must then be effectively controlled by varying the linear speed of the glass beads exiting downwards. This speed is set by adjusting the height of the free surface of the molten glass in the bowl, so as to have a corresponding hydrostatic head in the bowl.

Sometimes, the diameter selected for the orifices does not enable to achieve a total glass flow rate actually corresponding to the one required by the forming sections.

By way of example, in order to produce glassware with a very small weight, an orifice ring with equally small diameter orifices must be selected and installed, but the latter causes hydraulic resistance that tends to reduce the total glass flow rate. By shrinking the orifices beyond a certain limit, the total glass flow rate is not sufficient to meet the production rate of all the forming sections.

In these cases, the following solutions can be implemented:
- deactivate certain forming sections, but this solution obviously lowers production;
- change the diameter of the orifices (smaller or larger, depending on whether the total glass flow rate is too large or too small) by fitting a different orifice ring. In this case, however, sub-optimal loading of the glass gobs, due to a different ratio of length to diameter of the glass gobs, must be accepted.

The solution schematically shown in EP3450406A1 comprises a tubular portion that increases the overall height of the component used as orifice ring. This increase in height spaces the orifices downwards, as opposed to conventional solutions in which the orifice ring is simply defined by a plate placed at the end wall of the bowl housing the molten glass.

It is, however, evident from the above that, in the prior art, only one parameter is available, namely the diameter of the orifices, as a setting during production changes to meet various requirements (weight, gob diameter/length ratio, glass flow rate required by the forming sections). Due to this limited room for handling the settings during production changes, it is not always possible to find a satisfactory compromise.

The purpose of this invention is, therefore, to provide a configuration method and a configurable feeding assembly for forming and feeding glass gobs into an individual section machine for forming hollow glassware, which enables the above problem to be solved simply and economically.

### Summary

According to this invention, a configuration method for configuring a feeding assembly during a production change, to form and feed glass gobs into an individual section machine for forming hollow glassware is provided, as defined in claim 1.

According to this invention, in addition, a feeding assembly for forming and feeding glass gobs into an individual section machine for forming hollow glassware is provided, as defined in claim 4.

The dependent claims define preferred embodiments of the invention.

### Brief Description of the Drawings

In order to better understand this invention, a number of non-limiting embodiments thereof will now be described by way of example with reference to the attached drawings, in which:
- Figure 1 is a perspective view from below partially illustrating a preferred embodiment of the configurable feeding assembly for forming and feeding glass gobs into an individual section machine for forming hollow glassware, according to this invention;
- Figure 2 is a cross section of the feeding assembly in Figure 1, according to a vertical cross-section plane indicated generically by the line II-II in Figure 1;
- Figure 3 is an enlarged view of a detail in Figure 2;
- Figures 4 and 5 are similar to Figure 3 and show how the feeding assembly can be configured according to the teachings of this invention;
- Figure 6 schematically shows a kit for configuring the feeding assembly; and
- Figure 7 is a graph showing the flow rate of molten glass using the kit of this invention.

### Description of preferred embodiments

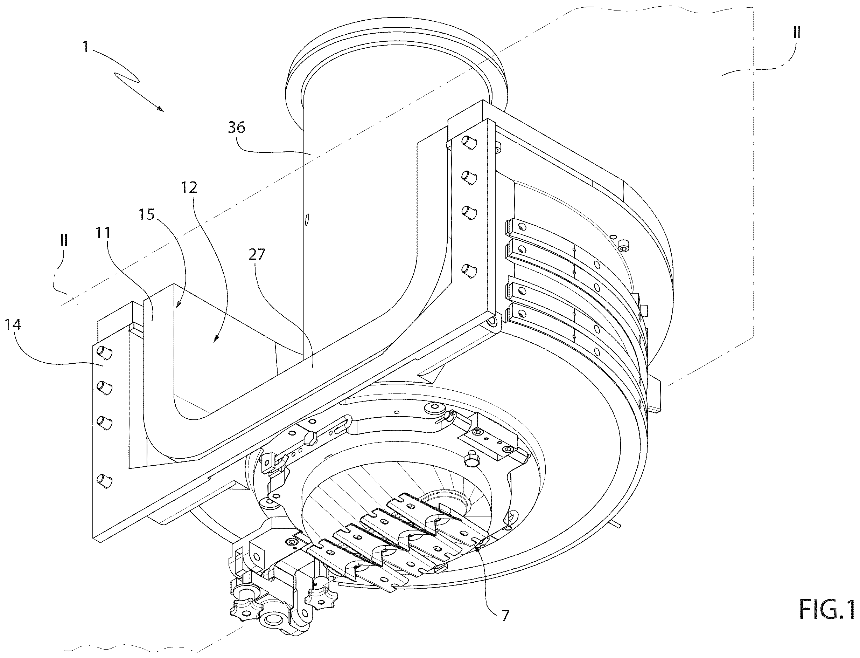

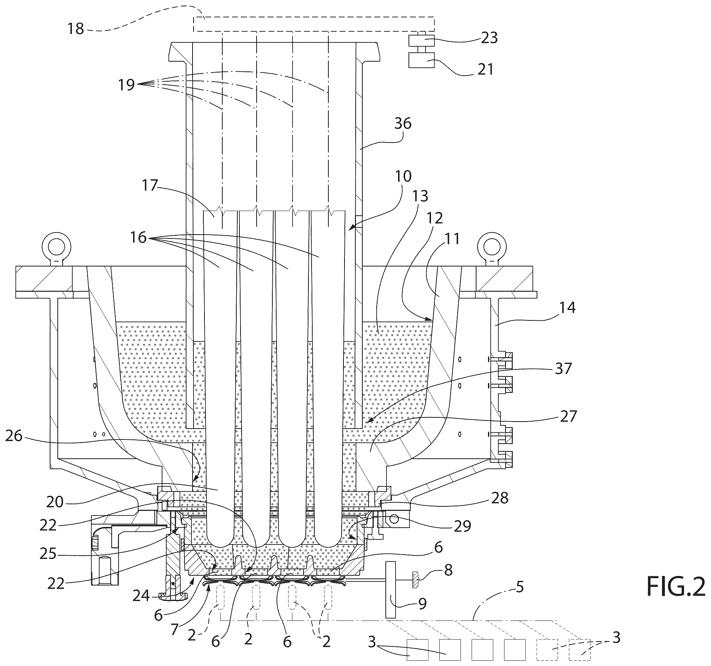

In Figure 1, reference number 1 shows a configurable feeding assembly (partially illustrated), as a whole, for forming and feeding glass gobs 2, schematically illustrated in Figure 2, into an individual section machine for forming hollow glassware.

As schematically depicted in Figure 2, this machine, usually referred to as an I.S. machine, comprises multiple forming sections 3, arranged along a horizontal row.

Each of the forming sections 3, as known and not illustrated, has a draft mould and a finishing mould, which are configured to form a certain number of glass articles, between one and four, from glass gobs 2 respectively, are driven by corresponding mould opening/closing devices and are connected to corresponding cooling systems. Each forming section 3 also has a pick-up and inversion unit to pick up the semi-finished glass articles (also known as "parisons") formed in the draft mould and transfer them to the finishing mould, and a pick-up and transfer unit to pick up the glass articles formed in the finishing mould and deposit them on a shelf, from which the same articles are then pushed onto an outlet conveyor, parallel to the row of forming sections 3. Each forming section 3 also has multiple mechanisms connected to the moulds, including: a funnel mechanism and a buffer mechanism, connected to the draft mould, to guide the entry of the glass gobs 2 and to close the draft mould at the top; a plunger mechanism, to create a cavity within the glass mass contained in the draft mould; and a pneumatic blowing head mechanism connected to the finishing mould to force the glass against the walls of that mould and to cool those walls. As mentioned above, the forming sections 3 have characteristics that are known and, moreover, are not relevant to this invention.

The glass gobs 2 are sorted into the draft moulds of the various forming sections 3 by means of a gob distribution and delivery system 5, also known and schematically illustrated in Figure 2, and are obtained by cutting one or more glass beads 6, using a cutting device 7 (partially illustrated), for example scissors.

The device 7 forms part of the feeding assembly 1 and is coupled to a fixed support frame 8 by means of a connecting device 9, schematically illustrated and configured in such a way that the height position of the device 7 can be adjusted, for a purpose that will be explained in more detail below.

The feeding assembly 1 also comprises an extruder or thrust device 10, partially illustrated, and a crucible or bowl 11, which defines a cavity 12 containing, in use, a mass of molten glass 13. Specifically, the bowl 11 is coupled in a fixed position on a structure 14, which is shaped like a half shell so as to surround the bowl 11 and, preferably, is configured to provide thermal insulation with respect to the cavity 12, in a manner known and not described in detail.

The bowl 11 and/or structure 14 are supported in such a way that they are in a fixed position in relation to the frame 8. In particular, with reference to Figure 1, the bowl 11 is arranged at the end of a "forehearth", not illustrated, defining a channel that conveys a flow of molten glass exiting a glass furnace to a side inlet opening 15 of the cavity 12.

With reference to Figure 2, the mass of molten glass 13 contained in the cavity 12 is pushed by the device 10 in such a way as to form the glass beads 6. The device 10 comprises, for each glass bead 6, a respective plunger 16, which is supported at one of its upper ends 17 in a known manner (e.g. by means of a corresponding horizontal support arm 18, schematically illustrated), extends downwards along a corresponding vertical axis 19 and sinks, with its own lower end 20, into the cavity 12 and, thus, into the mass of molten glass 13.

The plungers 16 are driven by an actuator device 21, also known and schematically illustrated, so as to axially translate with reciprocating motion, with respect to the bowl 11, and form the glass beads 6, essentially by extrusion through respective orifices 22. The height position of the bottom dead centre of the stroke of the plungers 16, in relation to the bowl 11, can be varied by means of an adjustment device 23, which is known and schematically illustrated. The adjustment device 23 is preferably integrated into the actuator device 21: in fact, with the electronic control systems currently used, the top and bottom dead centres and the law of motion of the plungers 16 are set by acting on a so-called "electronic cam" provided in the same control system.

Incidentally, increasing the vertical stroke of the plungers 16 generally leads to an increase in the weight of the glass gobs 2.

The orifices 22 are formed coaxially to the plungers 16 in an outlet body 24, known as an orifice ring arranged at the lower end of the cavity 12. The outlet body 24 is coupled by means of a retaining device 25, which is known and not described in detail, in such a way as to remain in a fixed position with respect to the bowl 11 during use, and in such a way as to be releasable with respect to the bowl 11, in order to be replaced.

In particular, the cavity 12 ends below with a vertical channel 26 to the outlet body 24. The channel 26 extends through a horizontal wall 27 at the bottom of the bowl 11 and through an annular portion 28 of the structure 14, located below the wall 27. More specifically, the outlet body 24 delimits a chamber 29 that represents the lower end of the channel 26. More specifically, the outlet body 24 is fixed to the annular portion 28 of the structure 14 by the device 25 so as to release the fastening and replace the outlet body 24, as mentioned above, and so as to ensure a seal against the molten glass contained in the channel 26. In turn, the coupling between the annular portion 28 and the bottom wall 27 is also configured in such a way as to ensure it is sealed with respect to the molten glass contained in the channel 26.

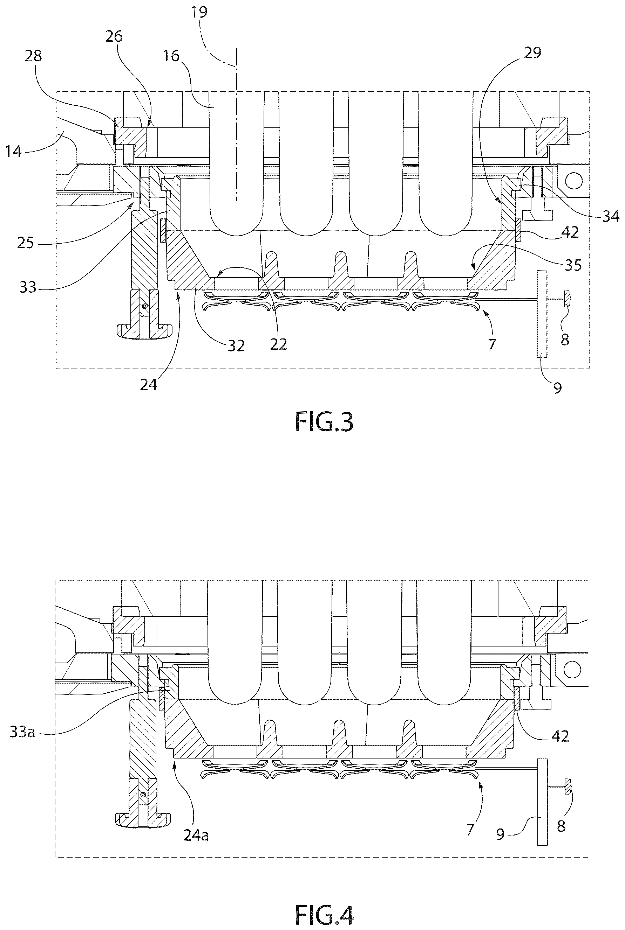

Referring to Figure 3, the outlet body 24 comprises a lower plate 32, in which the orifices 22 are made, and a side wall 33 extending upwards along the perimeter of the plate 32 so as to define the annular profile of the chamber 29. In addition, the outlet body 24 comprises an attachment system, by way of example defined by a flange 34 protruding outwards from an upper edge of the side wall 33, to cooperate with the device 25 and enable the releasable attachment of the outlet body 24.

According to a variant, not illustrated, the attachment system comprises a metal structure fixed to the outlet body 24, for example by case-hardening, below the lower plate 32, and coupled to the device 25 in a replaceable manner. In particular, at the side wall 33, the channel 26 has a through cross section having an area that is constant along the vertical direction. More specifically, the plate 32 has an upper surface 35 that is shaped, in a manner not described in detail, to guide and converge the molten glass towards the orifices 22 during the axial thrust of the respective plungers 16.

The latter are surrounded by a tubular component 36, shown in Figure 1. With reference to Figure 2, the tubular component 36 is coaxial to the channel 26 and, preferably, can be rotated about its vertical axis and has a through cross section having the same shape and dimensions as the channel 26, so as to be aligned with the latter. The tubular component 36 is spaced vertically from the wall 27 so as to leave open a slit 37, which extends as a ring around the mouth of the channel 26 and allows the molten glass to flow towards the channel 26 and towards the inside of the same tubular component 36. With respect to the wall 27 of the bowl 11, the height position of the tubular component 36 can be adjusted, in a known manner not illustrated, to vary the width of the annular slit 37: this adjustment, in practice, allows the position of the free surface of the molten glass 13 inside the tubular component 36 to be changed and, therefore, the hydrostatic head to be varied with respect to the wall 27.

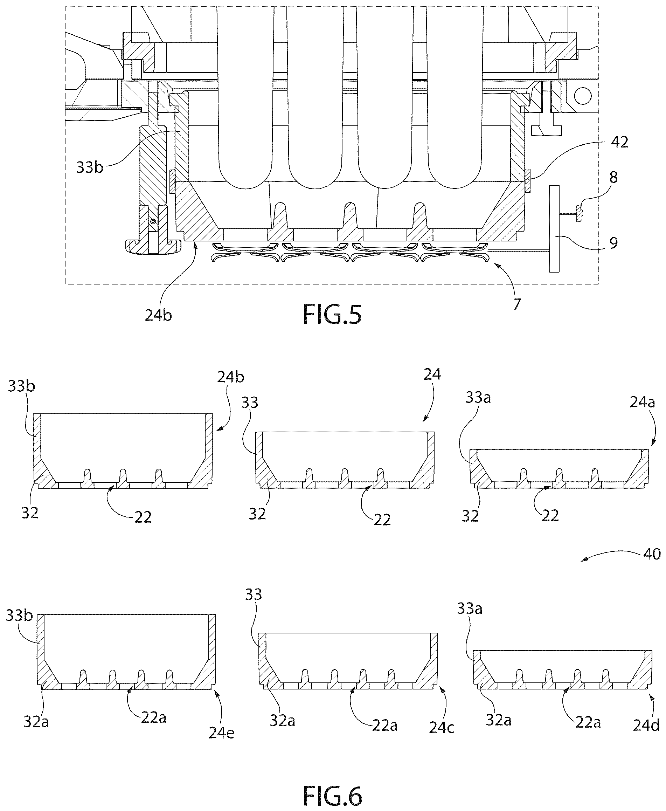

With reference to Figures 4 and 5, the hydrostatic head can also be varied by replacing the outlet body 24 with another outlet body 24a, 24b, etc... having the same attachment system (that is, with the same flange 34, in the specific case that has been illustrated) and having a side wall 33a, 33b, etc... with a different height. In fact, according to a preferred aspect of this invention, the feeding assembly 1 comprises a kit or set, indicated by 40 in Figure 6, defined by a plurality of outlet bodies 24, 24a, 24b, etc.... which are configured to be mounted interchangeably (that is, one as an alternative to the other) below the bowl 11, that is, at a lower end of the cavity 12, and differ from each other in
- the diameter of the orifices 22 in the plate 32, and/or
- the height of the annular wall 33 (and, thus, the depth or vertical distance of the orifices 22 with respect to the wall 27 of the bowl 11 and/or with respect to the annular portion 28 of the structure 14).

In fact, in general, the term "height" for the outlet body and/or side wall means the vertical distance of the orifices 22 from the bowl 11 and/or from the structure 14.

In particular, for a given height of the side wall 33 (33a, 33b, etc...), the kit 40 comprises another outlet body 24c (24d, 24e, etc...) that has the same height, but differing in that it comprises a plate 32a with orifices 22a having a larger or smaller diameter than the orifices 22.

Similarly, for each diameter of the orifices 22 and 22a, the kit 40 comprises at least two outlet bodies (24, 24a, 24b, etc.; 24c, 24d, 24e, etc.) which differ from each other only in the height of their side wall 33, 33a, 33b, etc.....

By changing the height of the side wall 33, 33a, 33b, it is advisable to configure the feeding assembly 1 also with regard to the height position of the bottom dead centre of the vertical stroke of the plungers 16 and the height position of the device 7.

With regard to the device 7, the latter is arranged immediately below the orifices 22, so as to cut the glass beads 6 as they exit those orifices 22, according to the preferred solution shown in the attached figures. Therefore, a change in the height position of the plate 32 with the orifices 22 requires a consequent change in the height position of the device 7, acting on the connecting device 9 mentioned above. For example, the connecting device 9 may comprise a slide that supports the device 7 and is vertically movable in response to the rotation of a manually or motor-driven screw or female screw, with the addition of a locking mechanism, that stops the slide to prevent the blades of the device 7 from vibrating during cutting and is releasable to allow adjustment.

In particular, the maximum vertical stroke allowed by the connecting device 9 also limits the maximum height of the outlet bodies 24, 24a, 24b, etc. that can be installed. For example, this maximum stroke can be 5 cm.

With regard to the plungers 16, as mentioned above, the setting of the height position of their bottom dead centre is preferably carried out by the system controlling the actuator device 21.

In the preferred embodiment that is illustrated, the side wall 33 and the plate 32 of the outlet body 24 (as well as the corresponding parts of the outlet bodies 24a, 24b, etc.) are defined by respective pieces that are separate from each other and are fastened to each other in a releasable and interchangeable way. The fastening is defined by an appropriate securing device 42, schematically illustrated in Figures 3-5: the kind of securing device 42 can be chosen from those available on the market, or it can be designed in a dedicated manner. It must allow the two pieces to fit together in such a way as to guarantee the seal, when they are fastened together, and to guarantee separation and replacement, when it is necessary to make a production change in the forming sections 3.

Thanks to the separation of the side wall 33 and the plate 32, the kit 40 is even more versatile, as it consists of a limited number of pieces to form different outlet bodies 24, 24a, 24b, 24c, 24d, 24e, etc..... In fact, it can consist of a single lower plate for each diameter of the orifices, and a single side wall for each height of the outlet bodies. Thus, just the side wall needs to be replaced to adjust the height of the outlet body, and just the lower plate needs to be replaced to adjust the diameter of the orifices.

Alternatively, the side wall 33 and the plate 32 are not releasable, for example they are portions of a single piece. In such cases, the outlet body 24 is completely replaced to change even just one of either the height of the side wall 33 or the diameter of the orifices 22.

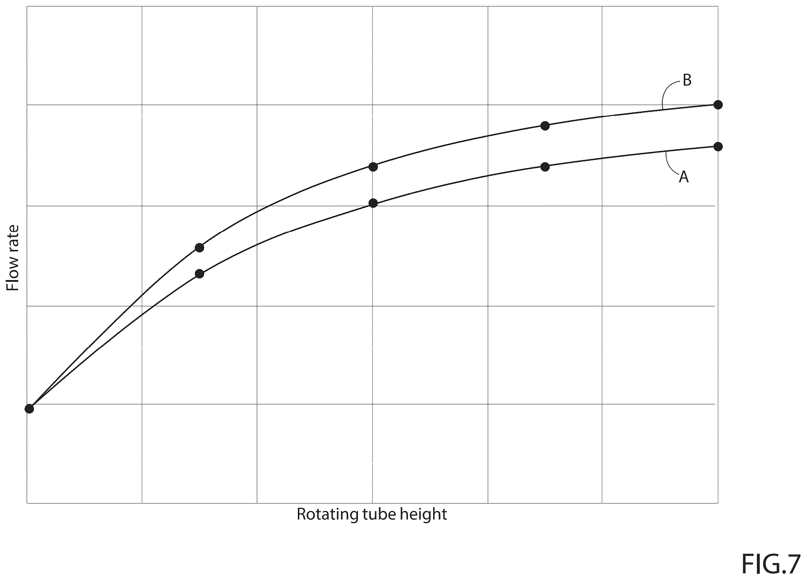

Figure 7 shows how a change in the hydrostatic head generated by the addition of the side wall 33 changes the flow rate of the molten glass fed by the assembly 1. More specifically, the curve indicated by reference A relates to the flow rate of glass fed by mounting only the lower plate 32, without the side wall 33, while the curve indicated by reference B relates to the flow rate of glass fed by mounting the entire outlet body 24, that is, the combination of the side wall 33 and lower plate 32.

In order to select the outlet body to be mounted, from among the ones available in the kit 40, first of all, the glass flow rate (also referred to as the "rate") required in total by the forming sections 3, after the production change, is calculated on the basis of the weight of the items to be produced, the forming/production speed, the number of cavities per mould, the number of forming sections 3, the temperature of the glass (which influences its viscosity), etc....

This total glass flow rate defines a target glass flow rate that the assembly 1 must meet, in particular so as not to have to exclude one or more forming sections 3, and thus not to have to reduce production.

Based on predefined graphs or tables, namely graphs or tables previously obtained experimentally or through simulations, the outlet body of the kit 40 is identified so as to meet the target glass flow rate, as well as the weight and diameter to length ratio (shape factor) of the glass gobs 2.

In particular, on the basis of such graphs or tables, an optimal diameter value is selected for the orifices (from among the diameters which are available in the kit 40), in order to satisfy the weight and shape factor required for the glass gobs 2. Subsequently, one of the heights of the outlet bodies 24, 24a, 24b, etc., which are available, is taken as the reference and it is checked whether this reference, with its corresponding hydrostatic head, satisfies the target glass flow rate, in particular also taking into account the various adjustments which are available in the assembly 1 (that is, the variation in height of the tubular component 25 and the variations of the stroke and the displacement law of the plungers 16). If this check yields a positive result, the outlet body is fitted with the orifice diameter and height that have been selected; if not, the "height" parameter is adjusted (preferably keeping unchanged the diameter that has been previously selected on the basis of the above graphs/tables). This variation of the "height" parameter is carried out in such a way as to get as close as possible to the target glass flow rate.

Theoretically, when needed, if an outlet body with the height set by this procedure were not readily available in the kit 40, it might be relatively simple to construct and add a shimming spacer achieving the height that, in turn, would achieve the target glass flow rate. Therefore, in principle, the "height" parameter could be varied by adding and removing common shimming spacers without having specially constructed side walls (33, 33a, 33b) already available in the kit 40.

Should more than one outlet body fulfil all the requirements (weight, shape factor, rate), a respective control curve can be considered for each of them, correlating the height position of the tubular component 25 with the fed glass flow rate. The choice is made according to the slope of these control curves: too low a slope would lead to poor control capacity, while too high a slope would lead to excessive sensitivity to errors and/or imperfections.

It is evident from the above that, in the event of a production change in the forming sections 3, the operators have two different parameters to be set in the feeding assembly 1, namely the height of the outlet body 24 and the diameter of the orifices 22, preferably using the kit 40, so there is more flexibility than the prior art in meeting the production requirements (weight of the glass gobs 2, shape factor of the glass gobs 2, rate required by the forming sections 3).

In other words, the operators have one more parameter to set, compared to known solutions where only the diameter can be varied.

In addition, the possibility of setting the height of the outlet body 24 makes it possible to extend the adjustment range of the hydrostatic head that could be achieved by only varying the height position of the tubular component 36.

Finally, it is clear from the above that modifications can be made to the configuration method and feeding assembly 1 described above with reference to the attached figures, and variations produced thereto, without departing from the scope of protection defined by the attached claims.

In particular, it is possible to choose different types for the connecting or securing devices, actuating devices, adjustment devices, etc., which have been mentioned above, since the relevant aspect of this invention is that it is possible to vary both the height of the outlet body 24 and the diameter of the orifices 22, in combination with each other, by appropriately choosing parts from the kit 40 which is available in the assembly 1.

In addition, the plates 32, 32a of the kit 40 could be fitted with the same attachment system as the side walls 33, 33a, 33b (for example, be fitted with a flange equal to the flange 34), so that they can be directly attached below the bowl 11, without therefore fitting any side walls.

Finally, the choice of the outlet body from those available in the kit 40 could be made by a different procedure from the one described above and claimed below, for example it could be made by trial and error.

## Claims

1. A configuration method for configuring a feeding assembly (1) during a production change, to form and feed glass gobs (2) in an individual section machine for forming hollow glassware; the feeding assembly (1) comprising:
- a bowl (11) defining a cavity (12) adapted to receive and contain, in use, a mass of molten glass (13);
- a plurality of outlet bodies (24, 24a, 24b, 24c, 24d, 24e) having respective orifices (22,22a) of different diameters and configured so that they can be mounted in a fixed position and interchangeably at a lower end of said cavity (12);
- at least one plunger (16) having a vertical axis (19) aligned with a corresponding orifice (22,22a) of the outlet body (24) that has been mounted; the plunger (16) being axially movable in said cavity (12) to form a glass bead (6) through said orifice (22) from said mass of molten glass (13);
- a cutting device (9) arranged below said orifice (22) and operated so as to cut said glass bead (6) and form said glass gobs (2);
the configuration method comprising the steps of:
- selecting one of said diameters so as to meet a weight and/or a shape factor for the glass gobs (2) that will be fed by the feeding assembly (1) after the production change;
- determining a target glass flow rate;
- checking if the feeding assembly (1), with the selected diameter, meets the target glass flow rate;
- if the checking step provides a negative outcome, adjusting the height position of said orifice (22, 22a), with respect to said bowl (11), so as to get as close as possible to the target glass flow rate.

2. The configuration method according to claim 1, further comprising the step of:
- adjusting the height position of said cutting device (9), with respect to said bowl (11), based on the height position of said orifice (22,22a) that has been set during the adjustment step.

3. The configuration method according to claim 1 or 2, further comprising the step of:
- adjusting the height position of the bottom dead centre for the stroke of said plunger (16), with respect to said bowl (11), based on the height position of said orifice (22,22a) that has been set during the adjustment step.

4. A feeding assembly (1) for forming and feeding glass gobs (2) in an individual section machine for forming hollow glassware, in particular for carrying out the configuration method according to any one of the preceding claims; the feeding assembly (1) comprising:
- a bowl (11) defining a cavity (12) adapted to receive and contain, in use, a mass of molten glass (13);
- a kit (40) comprising a plurality of outlet bodies (24, 24a, 24b, 24c, 24d, 24e), which have respective orifices (22,22a) of different diameter and are configured so that they can be mounted at a lower end of said cavity (12), in a fixed position and interchangeably;
- at least one plunger (16) having a vertical axis (19) aligned with the orifice (22) of the outlet body (24) that has been selected from the kit (40) and has been mounted; the plunger (16) being axially movable in said cavity (12) to form a glass bead (6) through said orifice (22) from said mass of molten glass (13);
- a cutting device (9) arranged below said orifice (22) and operated so as to cut said glass bead (6) and form said glass gobs (2);
**characterized in that** at least one of the outlet bodies (24, 24a, 24b, 24c, 24d, 24e) of said kit (40) comprises a lower plate provided with said orifice (22, 22a) and a side wall (33, 33a, 33b) extending upwards along a perimeter of said lower plate (32, 32a); and wherein the outlet bodies (24, 24a, 24b, 24c, 24d, 24e) of said kit (40) are different from each other also because they have different heights.

5. The feeding assembly according to claim 4, wherein, for each given height, said kit (40) comprises at least two outlet bodies (24, 24c; 24a, 24d; 24b ,24e) having respective orifices (22, 22a) with different diameters from each other.

6. The feeding assembly according to claim 4 or 5, wherein, for each given diameter of the orifices (22; 22a), said kit (40) comprises at least two outlet bodies (24, 24a, 24b; 24c, 24d, 24e) having heights different from each other.

7. The feeding assembly according to any one of claims 4 to 6, wherein said side wall and said lower plate are defined by portions of a single piece.

8. The feeding assembly according to any one of claims 4 to 6, wherein said side wall and said lower plate are defined by pieces which are distinct from each other and are configured so that they can be interchangeably fixed to at least one further lower plate or, respectively, to at least one further side wall.

9. The feeding assembly according to any one of the preceding claims, wherein a connecting device (9) is provided for coupling said cutting device (7) to a support frame (8), and wherein said connecting device (9) is configured so as to be able to vary the height position of said cutting device (7) with respect to said bowl (11).

10. The feeding assembly according to any one of the preceding claims, wherein an adjustment device (23) is provided for varying the position of the bottom dead centre of the axial stroke of said plunger (16) in said cavity (12).
